# EUROPÄISCHE PATENTANMELDUNG

(11) **EP 4 682 152 A1**
(43) Veröffentlichungstag der Anmeldung: **21.01.2026**
(21) Anmeldenummer: 24188691.0
(22) Anmeldetag: 15.07.2024
(51) Int. Cl.: C07F 9/6571, C08K 5/00, C08L 67/02, C09K 21/12

(54) **DOPO-DERIVATE ALS FLAMMSCHUTZMITTEL**

(71) Anmelder: Schill + Seilacher "Struktol" GmbH, 22113 Hamburg (DE)
(72) Erfinder: Pinnschmidt, Angelica Aran, 22041 Hamburg (DE); Bargmann, Isabell, 22047 Hamburg (DE); Imeri, Seljam, 22117 Hamburg (DE); Stahl, Sarah-Franziska, 21502 Geesthacht (DE)
(74) Vertreter: Eisenführ Speiser

(57) **Zusammenfassung**

Die Erfindung betrifft eine Verbindung mit der folgenden chemischen Formel (I) 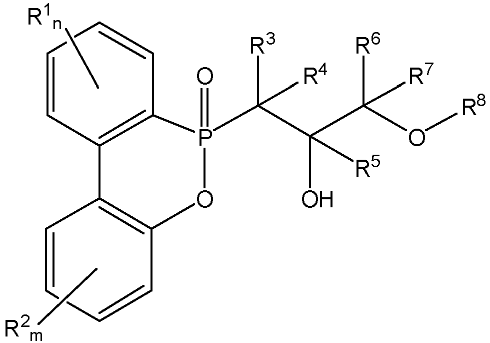 sowie ein Flammschutzmittel, welches die erfindungsgemäße Verbindung umfasst. Weiterhin betrifft die vorliegende Erfindung eine Polyesterharzformulierung, die mindestens ein ungesättigtes vernetzbares Polyesterharz und mindestens ein erfindungsgemäßes Flammschutzmittel umfasst. Weiterhin betrifft die vorliegende Erfindung die Verwendung der erfindungsgemäßen Verbindung als Flammschutzmittel in einem ungesättigten vernetzbaren Polyesterharz. Schließlich betrifft die vorliegende Erfindung ein Verfahren zur Herstellung der erfindungsgemäßen Verbindung, wobei eine Verbindung der hierin beschriebenen Formel (III) mit einer Verbindung der hierin beschriebenen Formel (IV) in der Gegenwart eines Katalysators umgesetzt wird.

## Beschreibung

### GEBIET DER ERFINDUNG

Die vorliegende Erfindung betrifft neue Derivate von 9,10-Dihydro-9-oxa-10-phosphaphenanthren-10-oxid (DOPO), Verfahren zu deren Herstellung sowie deren Verwendung in Flammschutzmitteln für Polyesterharze.

### HINTERGRUND DER ERFINDUNG

Aufgrund ihrer Brennbarkeit erfordern thermoplastische und duroplastische Polymere, z. B. Polyester, Polyamide, Epoxidharze und Polyurethane, für viele Anwendungen die Verwendung von Flammschutzmitteln. In der Regel werden halogenierte Verbindungen, insbesondere aromatische polybromierte Verbindungen, als flammhemmende Zusatzstoffe in Polymeren verwendet. Halogenierte Flammschutzmittel rufen jedoch ökologische Bedenken hervor. Außerdem bilden halogenierte Flammschutzmittel im Brandfall Halogenwasserstoffe, welche ätzend und gesundheitsschädlich sind.

Es wurden deshalb in der Vergangenheit vermehrt halogenfreie Flammschutzmittel wie Aluminiumtrihydrat, Magnesiumhydroxid, Ammoniumpolyphosphat, verkapselter roter Phosphor und das sowohl Phosphor als auch Stickstoff enthaltende Melaminpolyphosphat verwendet. Nachteilig an den genannten halogenfreien additiven Flammschutzmitteln ist jedoch, dass sie hochschmelzende Feststoffe sind, die weder in ausreichendem Maße in den härtbaren Kunstharzen gelöst noch eingemischt werden können. Weiterhin müssen diese Substanzen jedoch oft in Kombination mit Blähgraphit als Synergisten eingesetzt werden.

Eine weitere Möglichkeit ist die Verwendung von 9,10-Dihydro-9-oxa-10-phospha-phenanthren-10-oxid (DOPO) als Flammschutzmittel. Der Einsatz von DOPO in ungesättigten Polyesterharzen führt jedoch zu einer Verschlechterung der mechanischen Eigenschaften der Materialien. Der Grund dafür liegt darin, dass DOPO als ein Radikalfänger wirken kann und damit der gewünschte Vernetzungsgrad der ungesättigten Polyesterharze nicht erreicht wird.

Es ist daher wünschenswert, neue Flammschutzmittel zu entwickeln, die das mechanische Eigenschafts-Niveau von Polyesterharzen nicht negativ beeinflussen und gleichzeitig einfacher herzustellen sind.

Gemäß einem ersten Aspekt betrifft die vorliegende Erfindung eine Verbindung mit der folgenden chemischen Formel (I), 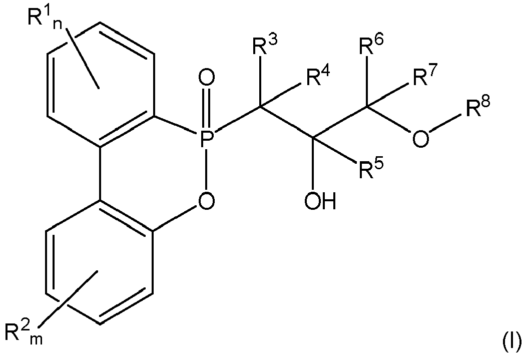 in der
R¹ und R² jeweils gleich oder verschieden sind und jeweils unabhängig voneinander C₁ - bis C₁₂- Alkyl, C₁ - bis C₁₂- Alkenyl, C₃ - bis C₈- -Cycloalkyl, C₆ - bis C₁₄ -Aryl, C₇ - bis C₃₀-Alkylarylgruppen sind; wobei ein oder mehrere C-Atome durch ein O- oder N-Atom substituiert sein können und/oder ein oder mehrere H-Atome durch eine OH-Gruppe substituiert sein können,
R³, R⁴, R⁵, R⁶ und R⁷ gleich oder verschieden sind und jeweils unabhängig voneinander
H, oder C₁ - bis C₁₂- Alkylgruppen sind; wobei ein oder mehrere C-Atome durch ein O- oder N-Atom substituiert sein können und/oder ein oder mehrere H-Atome durch eine OH-Gruppe substituiert sein können;
n und m jeweils unabhängig voneinander ganze Zahlen von 0 bis 4 sind; und R⁸ eine C₂ - bis C₁₄- Alkenylgruppe mit einer terminalen Doppelbindung ist.

Gemäß einem zweiten Aspekt betrifft die vorliegende Erfindung ein Flammschutzmittel, welches die Verbindung nach dem ersten Aspekt der Erfindung umfasst.

Gemäß einem dritten Aspekt betrifft die vorliegende Erfindung eine Polyesterharzformulierung, die mindestens ein ungesättigtes vernetzbares Polyesterharz und mindestens ein Flammschutzmittel gemäß dem zweiten Aspekt der Erfindung umfasst.

Gemäß einem vierten Aspekt betrifft die vorliegende Erfindung die Verwendung der Verbindungen nach dem ersten Aspekt der Erfindung als Flammschutzmittel in einem ungesättigten vernetzbaren Polyesterharz, wobei die entstehende Polyesterharzformulierung die Eigenschaften wie im Zusammenhang mit dem dritten Aspekt definiert, aufweist.

Schließlich betrifft die vorliegende Erfindung ein Verfahren zur Herstellung einer Verbindung nach dem ersten Aspekt der Erfindung, wobei eine Verbindung der Formel (III) mit einer Verbindung der Formel (IV) 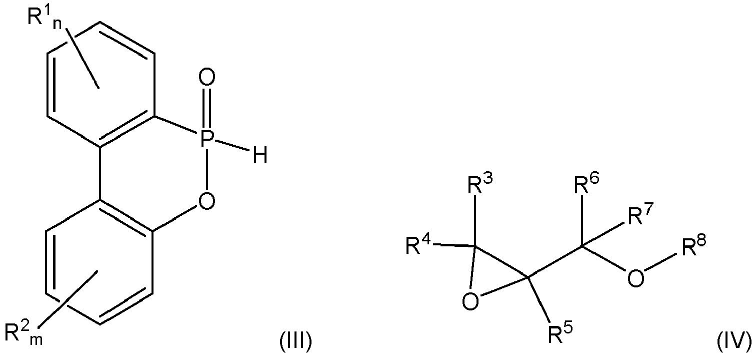 in der Gegenwart eines Katalysators umgesetzt wird.

Kann ein Merkmal der Erfindung in einer oder mehreren verschiedenen Ausführungsformen vorhanden sein, so beziehen sich im Folgenden ausführlich beschriebene Varianten auf alle (verschiedenen) Ausführungsformen, auch wenn nicht ausdrücklich Plural verwendet wird.

Bevorzugte Ausführungsformen sind auch in den Unteransprüchen offenbart.

### DETAILLIERTE BESCHREIBUNG DER ERFINDUNG

Die Erfinder haben im Zuge ihrer Forschungen festgestellt, dass eine Gruppe von Verbindungen, welche die nachstehende Struktur mit der Formel (I) aufweisen, als flüssige, reaktive Flammschutzmittel für Polyesterharze eingesetzt werden können, wobei die Verbindungen mit dem chemischen "Rückgrat" des Polyesterharzes reagieren, ohne die mechanischen Eigenschaften des Polyesterharzes zu verändern bzw. zu verschlechtern: 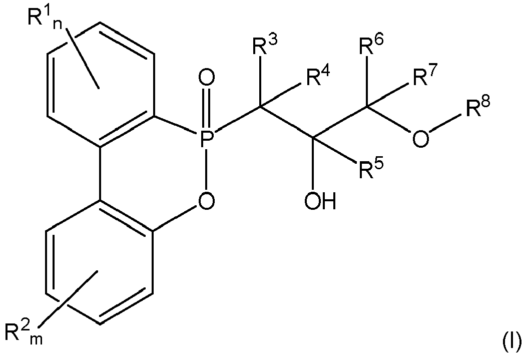 in der
R¹ und R² jeweils gleich oder verschieden sind und jeweils unabhängig voneinander C₁ - bis C₁₂- Alkyl, C₁ - bis C₁₂- Alkenyl, C₃ - bis C₈- -Cycloalkyl, C₆ - bis C₁₄ -Aryl, C₇ - bis C₃₀-Alkylarylgruppen sind; wobei ein oder mehrere C-Atome durch ein O- oder N-Atom substituiert sein können und/oder ein oder mehrere H-Atome durch eine OH-Gruppe substituiert sein können,
R³, R⁴, R⁵, R⁶ und R⁷ gleich oder verschieden sind und jeweils unabhängig voneinander H, oder C₁ - bis C₁₂- Alkylgruppen sind; wobei ein oder mehrere C-Atome durch ein O- oder N-Atom substituiert sein können und/oder ein oder mehrere H-Atome durch eine OH-Gruppe substituiert sein können;
n und m jeweils unabhängig voneinander ganze Zahlen von 0 bis 4 sind; und R⁸ eine C₂ - bis C₁₄- Alkenylgruppe mit einer terminalen Doppelbindung ist.

Weiterhin kann durch die Zugabe der erfindungsgemäßen Verbindungen die Viskosität von Polyesterharzformulierungen deutlich gesenkt werden. Diese Verringerung der Viskosität wird normalerweise durch Zugabe von organischen Lösemitteln wie Styrol erzielt. Durch die Verwendung der erfindungsgemäßen Verbindung kann der Styrol-Gehalt in Polyesterharzen vermindert werden, was Umweltvorteile hat.

Weiterhin ist der flüssige Zustand des Flammschutzmittels vorteilhaft gegenüber den üblichen, heute verwendeten Flammschutzmitteln wie APP und ATH, welche als Feststoffe eingesetzt werden. Bei der Verwendung der Feststoffe sind hohe Füllstoffgehalte notwendig (bis zu 60%), um viele Flammschutzanforderung erfüllen zu können. Gleichzeitig erhöht der Feststoffanteil auch das Gewicht des Matrixmaterial, was für viele Leichtbau-Anwendungen (Composites) nachteilig ist.

Wie dem Fachmann bekannt, kann die oben beschriebene Verbindung mit der Formel (I) auch in der folgenden tautomeren Form vorliegen:

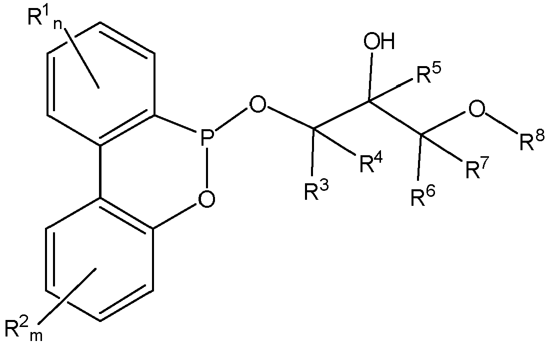

Diese tautomere Form ist von der vorliegenden Anmeldung mit umfasst und alle weiteren, weiter unten beschriebenen Verbindungen mit den chemischen Formeln (la) und (II) können ebenfalls in dieser tautomeren Form vorliegen.

Es ist weiterhin zu beachten, dass die erfindungsgemäßen Verbindungen geringe Mengen an Verunreinigungen aus der zur Herstellung der Verbindung verwendeten Reaktion enthalten kann. Die Verunreinigungen können Komponenten wie Katalysatoren, Lösungsmittel, andere Reaktionsprodukte, nicht umgesetztes DOPO und andere Reaktanten usw. enthalten.

In den Verbindungen mit der Formel (I) sind R¹ und R² jeweils gleich oder verschieden. Sie sind jeweils unabhängig voneinander C₁ - bis C₁₂- Alkyl, C₁ - bis C₁₂- Alkenyl, C₃ - bis C₈- -Cycloalkyl, C₆ - bis C₁₄ -Aryl, C₇ - bis C₃₀-Alkylarylgruppen. Ein oder mehrere C-Atome können durch ein O- oder N-Atom substituiert sein und/oder ein oder mehrere H-Atome durch eine OH-Gruppe substituiert sein. In einer bevorzugte Ausführungsform sind R¹ und R² jeweils unabhängig voneinander C₁ - bis C₆- Alkyl, vorzugsweise C₁ - bis C₃- Alkyl.

n und m sind jeweils unabhängig voneinander ganze Zahlen von 0 bis 4 in der Verbindung mit der Formel (I). In einer bevorzugten Ausführungsform sind n und m jeweils unabhängig voneinander 0 oder 1, vorzugsweise beide 0.

R³, R⁴, R⁵, R⁶ und R⁷ sind gleich oder verschieden und jeweils unabhängig voneinander H, oder C₁ - bis C₁₂- Alkylgruppen; wobei ein oder mehrere C-Atome durch ein O- oder N-Atom substituiert sein können und/oder ein oder mehrere H-Atome durch eine OH-Gruppe substituiert sein können.

In einer Ausführungsform sind R³, R⁴, R⁵, R⁶ und R⁷ gleich oder verschieden und jeweils unabhängig voneinander H, oder eine lineare C₁ - bis C₆- Alkylgruppen. In einer bevorzugten Ausführungsform sind R³, R⁴, R⁵, R⁶ und R⁷ gleich oder verschieden und jeweils unabhängig voneinander ausgewählt aus H, Methyl-, Ethyl- oder Propyl-, wobei vorzugsweise mindestens R³, R⁵, und R⁷ H ist/sind. In einer besonders bevorzugten Ausführungsform sind R³, R⁴, R⁵, R⁶ und R⁷ jeweils H.

R⁸ ist eine C₂ - bis C₁₄- Alkenylgruppe mit einer terminalen Doppelbindung. In einer bevorzugten Ausführungsform ist R⁸ eine lineare C₂ - bis C₁₄- Alkenylgruppe mit einer terminalen Doppelbindung. In einer besonders bevorzugten Ausführungsform ist R⁸ eine lineare C₂ - bis C₈-Alkenylgruppe mit einer terminalen Doppelbindung, vorzugsweise eine lineare C₂ - bis C₅-Alkenylgruppe mit einer terminalen Doppelbindung.

In einer bevorzugten Ausführungsform sind R¹ und R² jeweils unabhängig voneinander C₁ - bis C₆- Alkyl, R³, R⁴, R⁵, R⁶ und R⁷ sind jeweils unabhängig voneinander ausgewählt aus H, oder einer lineare C₁ - bis C₆- Alkylgruppen, R⁸ ist eine lineare C₂ - bis C₈- Alkenylgruppe und n und m sind jeweils unabhängig voneinander 0 oder 1.

In einer bevorzugten Ausführungsform sind R¹ und R² jeweils unabhängig voneinander C₁ - bis C₆- Alkyl, R³, R⁴, R⁵, R⁶ und R⁷ sind jeweils unabhängig voneinander ausgewählt aus H, Methyl-, Ethyl- oder Propyl-, R⁸ ist eine lineare C₂ - bis C₈- Alkenylgruppe und n und m sind jeweils unabhängig voneinander 0 oder 1.

In einer bevorzugten Ausführungsform hat die Verbindung der vorliegenden Erfindung die folgende chemische Formel (la):

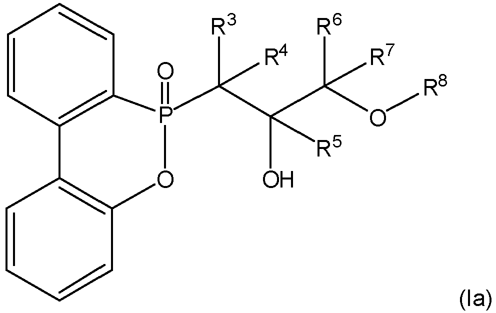

In einer bevorzugten Ausführungsform hat die Verbindung der vorliegenden Erfindung die chemische Formel (la), wobei R³, R⁴, R⁵, R⁶ und R⁷ jeweils unabhängig voneinander ausgewählt sind aus H, oder einer linearen C₁ - bis C₆- Alkylgruppen, und R⁸ eine lineare C₂ - bis C₈-Alkenylgruppe mit einer terminalen Doppelbindung ist.

In einer bevorzugten Ausführungsform hat die Verbindung der vorliegenden Erfindung die chemische Formel (la), wobei R³, R⁴, R⁵, R⁶ und R⁷ jeweils unabhängig voneinander ausgewählt sind aus H, Methyl-, Ethyl- oder Propyl-, und R⁸ eine lineare C₂ - bis C₈- Alkenylgruppe mit einer terminalen Doppelbindung ist.

In einer bevorzugten Ausführungsform hat die Verbindung der vorliegenden Erfindung die chemische Formel (la), wobei R³, R⁵, und R⁷ H sind und R⁴ und R⁶ jeweils unabhängig voneinander ausgewählt sind aus H, Methyl-, Ethyl- oder Propyl-, und R⁸ eine lineare C₂ - bis C₈-Alkenylgruppe mit einer terminalen Doppelbindung ist.

In einer bevorzugten Ausführungsform hat die Verbindung der vorliegenden Erfindung die chemische Formel (la), wobei R³, R⁴, R⁵, R⁶ und R'jeweils H sind und R⁸ eine lineare C₂ - bis C₈-Alkenylgruppe mit einer terminalen Doppelbindung ist.

In einer bevorzugten Ausführungsform hat die Verbindung der vorliegenden Erfindung die chemische Formel (la), wobei R³, R⁵, und R⁷ H sind und R⁴ und R⁶ jeweils unabhängig voneinander ausgewählt sind aus H, Methyl-, Ethyl- oder Propyl-, und R⁸ eine lineare C₂ - bis C₅-Alkenylgruppe mit einer terminalen Doppelbindung ist.

In einer bevorzugten Ausführungsform hat die Verbindung der vorliegenden Erfindung die chemische Formel (la), wobei R³, R⁴, R⁵, R⁶ und R⁷ jeweils H und R⁸ eine lineare C₂ - bis C₅-Alkenylgruppe mit einer terminalen Doppelbindung ist.

In einer bevorzugten Ausführungsform hat die Verbindung der vorliegenden Erfindung die folgende chemische Formel (II):

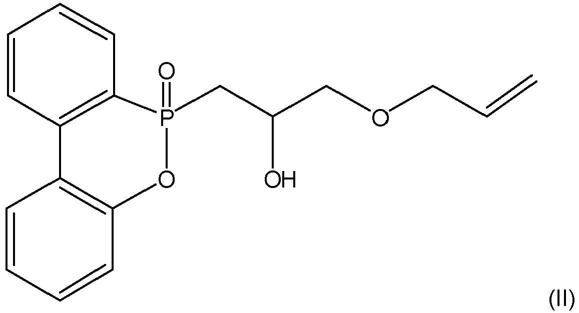

In einer bevorzugten Ausführungsform hat die Verbindung der vorliegenden Erfindung eine Viskosität, gemessen bei 25°C zwischen 5 bis 200 Pas, wie 10 bis 150 Pas, 15 bis 120 und insbesondere 20 bis 110 Pas, gemessen mit Hilfe eines Rotationsviskosimeter mit Platte-Kegel-Aufsatz (Standardmethode: Physica MCR 302e, Platte/Kegel-System 25mm/1°, Schergeschwindigkeit: 1s⁻¹, Spaltabstand: 0,058 mm, Messtemp.:25°C, Messzeit: 2 Min).

Die vorliegende Erfindung betrifft auch ein Verfahren zur Herstellung der erfindungsgemäßen Verbindung Hierbei wird eine Verbindung der Formel (III) mit einer Verbindung der Formel (IV) 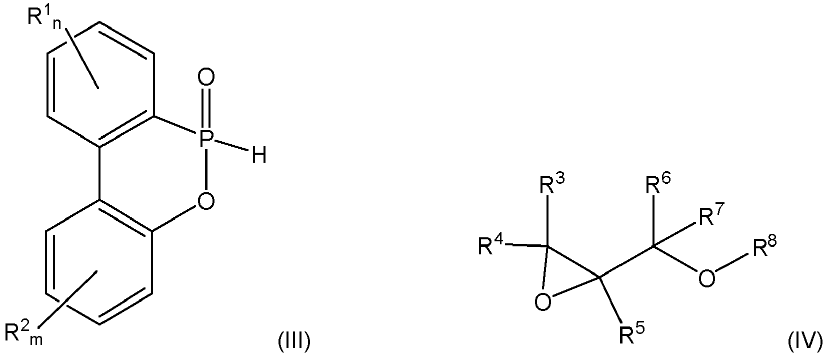 in der Gegenwart von Katalysator umgesetzt wird.

Bei dem Verfahren kann auch ein optionales Lösungsmittel eingesetzt werden. Beispiele für solche Lösungsmittel sind unter anderem Heptan, Hexan, Methylcyclohexan, Toluol, Xylol, Ethylbenzol, oder Mischungen davon.

Als Katalysator können basische Nukleophile wie beispielsweise Triethylamin (TEA), 4-Dimethylaminophenol (4-DMAP), Diazabicycloundecen (DBU) oder 1,5,7-Triazabicyclo[4.4.0]dec-5-en (TBD) verwendet werden. In einer bevorzugten Ausführungsform wird Triethylamin (TEA) als Katalysator verwendet.

Das Verfahren kann bei Temperaturen von 80 °C bis 200 °C durchgeführt werden, vorzugweise 130 °C bis 180 °C, insbesondere 140 °C bis 170 °C. Eventuell vorhandenes überschüssiges Ausgangsprodukt kann destillativ entfernt werden.

### Flammschutzmittel

Die oben beschriebenen Verbindungen können insbesondere in einem Flammschutzmittel verwendet werden.

In einer Ausführungsform besteht das Flammschutzmittel aus der erfindungsgemäßen Verbindung mit der Formel (I), (la) oder (II). In einer weiteren Ausführungsform enthält das Flammschutzmittel die erfindungsgemäße Verbindung mit der Formel (I), (la) oder (II) und mindestens ein weiteres Additiv.

Bevorzugte Additive, die in dem Flammschutzmittel enthalten sein können sind z.B. Hitzestabilisatoren, Lichtstabilisatoren, Ultraviolettlichtabsorber, Antioxidantien, Antistatikmittel, Konservierungsmittel, Haftvermittler, Füllstoffe, Pigmente, Farbstoffe, Schmiermittel, Formentrennmittel, Treibmittel, Fungizide, Weichmacher, Verarbeitungshilfsmittel, Säurefänger, Farbstoffe, Pigmente, Nukleierungsmittel, Netzmittel, Dispergiermittel, Synergisten, mineralische Füllstoffe, Verstärkungsmittel wie Glasfasern, Glasflakes, Kohlefasern oder Metallfasern; Whisker wie Kaliumtitanat, Aluminiumborat oder Kalziumsilikat; anorganische Füllstoffe und andere feuerhemmende Zusatzstoffe, Rauchunterdrücker und Mischungen davon.

In einer weiteren Ausführungsform enthält das Flammschutzmittel neben der erfindungsgemäßen Verbindung mit der Formel (I), (la) oder (II) mindestens eine zusätzliche Verbindung mit flammhemmenden Eigenschaften und ggf. weitere Additive.

Zu den zusätzlichen Verbindungen mit flammhemmenden Eigenschaften, die zusammen mit der erfindungsgemäßen Verbindung in dem Flammschutzmittel verwendet werden können, gehören unter anderem stickstoffhaltige Synergisten wie Ammoniumpolyphosphat (APP), Zinkhydroxystannat (ZHS), Melamin, Melaminphosphat, Melamincyanurat, Melaminpyrophosphat, Melaminpolyphosphat, Phosphat- und Cyanuratderivate von Guanidin und Piperazin, Phosphazenverbindungen, Polyphophazene, Antimonoxid, Siliciumdioxid, Talkum, Hydrotalcit, Boratsalze, hydratisiertes Aluminiumoxid wie Aluminiumtrihydrat (ATH), Böhmit, Wismutoxid, Molybdänoxid, Mischungen dieser Verbindungen mit Zink-, Aluminium- und/oder Magnesiumoxid oder -salzen. Das Flammschutzmittel kann auch mehrerer der genannten zusätzlichen Verbindungen mit flammhemmenden Eigenschaften enthalten.

In einer bevorzugten Ausführungsform umfasst das Flammschutzmittel 5 bis 70 Gew.-% der erfindungsgemäßen Verbindung mit der Formel (I), (la) oder (II) und 30 bis 95 Gew.-% zusätzliche Verbindung(en) mit flammhemmenden Eigenschaften, bezogen auf das Gesamtgewicht des Flammschutzmittels.

In einer bevorzugten Ausführungsform umfasst das Flammschutzmittel 20 bis 50 Gew.-% der erfindungsgemäßen Verbindung mit der Formel (I), (la) oder (II) und 50 bis 80 Gew.-% zusätzliche Verbindung(en) mit flammhemmenden Eigenschaften, bezogen auf das Gesamtgewicht des Flammschutzmittels.

In einer bevorzugten Ausführungsform enthält das Flammschutzmittel die Verbindung mit der Formel (I), (la) oder (II) und mindestens eine zusätzliche Verbindung mit flammhemmenden Eigenschaften ausgewählt aus der Gruppe bestehend aus Aluminiumtrihydrat (ATH), Zinkhydroxystannat (ZHS), Ammoniumpolyphosphat (APP) und/oder Mischungen davon, insbesondere Aluminiumtrihydrat.

In einer bevorzugten Ausführungsform besteht das Flammschutzmittel aus der erfindungsgemäßen Verbindung mit der Formel (I), (la) oder (II) und einer zusätzlichen Verbindung mit flammhemmenden Eigenschaften und optional weiteren Additiven, wobei die zusätzliche Verbindung mit flammhemmenden Eigenschaften ausgewählt ist aus der Gruppe bestehend aus Aluminiumtrihydrat (ATH), Zinkhydroxystannat (ZHS) und Ammoniumpolyphosphat (APP).

### Polyesterharzformulierung

Gemäß einem dritten Aspekt betrifft die vorliegende Erfindung eine Polyesterharzformulierung, die mindestens ein ungesättigtes vernetzbares Polyesterharz und mindestens ein Flammschutzmittel gemäß dem zweiten Aspekt der Erfindung umfasst.

Die Polyesterharzformulierung der vorliegenden Erfindung kann einen Gesamtphosphorgehalt von 0,5 bis 8 Gew.-% vorzugsweise von 1 bis 6 Gew.-% aufweisen und insbesondere 2 bis 4% Gew.-%. Wenn die erfindungsgemäße Verbindung zusammen mit einer zusätzlichen Verbindung mit flammhemmenden Eigenschaften in der Polyesterharzformulierung vorliegt, kann die Polyesterharzformulierung auch einen Gesamtphosphorgehalt von 0,5 bis 5 Gew.-% vorzugsweise von 0,8 bis 4 Gew.-% aufweisen und insbesondere 1 bis 3% Gew.-%.

Das in die Polyesterharzformulierung eingebrachte Flammschutzmittel der vorliegenden Erfindung weist eine ungesättigte Kohlenstoff-Kohlenstoff-Doppelbindung auf. Diese Doppelbindung kann mit den ungesättigten Gruppen in der Polyesterharzformulierung vernetzt werden, so dass ein dreidimensionales Netzwerk mit fest in der Harzmatrix verankertem Flammschutzmittel entsteht. Hierdurch ist gewährleistet, dass das eingebrachte Flammschutzmittel nicht mehr aus dem Material heraus migrieren kann und somit die Wirkung nicht verloren geht. Außerdem kann hierdurch ein Synergismus der Verbindung mit der Formel (I), (la) oder (II) und einer zusätzlichen Verbindung mit flammhemmenden Eigenschaften entstehen.

In einer bevorzugten Ausführungsform erfüllt die Polyesterharzformulierung nach der Härtung in einen gehärteten Polyester das Kriterium V-2 des Underwriter's Laboratories Standard UL 94 V Tests, insbesondere das Kriterium V-1 wie V-0.

In einer bevorzugten Ausführungsform ist mindestens ein ungesättigtes vernetzbares Polyesterharz ein Polykondensationsprodukt einer ungesättigten Dicarbonsäure und/oder deren Anhydrids und eines zwei- oder mehrwertigen Alkohols.

Bevorzugte Dicarbonsäure sind Itaconsäure, Maleinsäure, Fumarsäure, Bernsteinsäure, Adipinsäure, Phthalsäure, Isophthalsäure, Terephthalsäure und Tetrahydrophthalsäure. Bevorzugte ungesättigte Dicarbonsäureanhydride sind Itaconsäureanhydrid und Maleinsäureanhydrid.

Bevorzugte zweiwertige Alkohol sind 1,2-Propandiol, 1,3-Propandiol, 1,3-Butandiol, 1,4-Butandiol, Ethylenglykol, Neopentylglykol, Diethylenglykol und Tris-2-hydroxyethylisocyanurat. Besonders bevorzugt handelt es sich bei den Alkoholen um Propylenglykol und Ethylenglykol.

Das eingesetzte ungesättigte vernetzbare Polyesterharz kann in einer Lösung in Reaktivverdünner, wie beispielsweise Styrol vorliegen.

In einer bevorzugten Ausführungsform umfasst die Polyesterharzformulierung 1 bis 90 Gew.-% ungesättigtes vernetzbares Polyesterharz, vorzugsweise 10 bis 80 Gew.-%, insbesondere 15 bis 75 Gew.-%, bezogen auf das Gesamtgewicht der Polyesterharzformulierung.

Die Menge der Verbindung der Formel (I), (la) oder (II), die der Polyesterharzformulierung zugesetzt wird, kann in einem weiten Bereich variiert werden. In einer bevorzugten Ausführungsform liegt die Verbindung in der Polyesterharzformulierung in einer Konzentration von 1 bis 60 Gew.-% vor, vorzugsweise 10 bis 50 Gew.-%, insbesondere 15 bis 45 Gew.-%, bezogen auf das Gesamtgewicht der Polyesterharzformulierung. Alternativ wird die Menge der Verbindung der Formel (I), (la) oder (II) in der Polyesterharzformulierung so gewählt, dass die Zusammensetzung 0,5 bis 8 Gew.-% vorzugsweise von 1 bis 6 Gew.-% und insbesondere 2 bis 4% Gew.-% Phosphor enthält, bezogen auf das Gesamtgewicht der Polyesterharzformulierung.

Wenn die erfindungsgemäße Verbindung zusammen mit einer zusätzlichen Verbindung mit flammhemmenden Eigenschaften in der Polyesterharzformulierung vorliegt, kann die Menge der Verbindung der Formel (I), (la) oder (II) in der Polyesterharzformulierung so gewählt werden, dass die Polyesterharzformulierung einen Gesamtphosphorgehalt von 0,5 bis 5 Gew.-% vorzugsweise von 0,8 bis 4 Gew.-% und insbesondere 1 bis 3% Gew.-%. aufweist. Es hat sich herausgestellt, dass schon mit den genannten geringen Phosphoranteilen ein ausreichender Flammschutz bereitgestellt werden kann.

In einer Ausführungsform besteht das Flammschutzmittel aus der erfindungsgemäßen Verbindung. und liegt in einer Konzentration von 1 bis 60 Gew.-%, vorzugsweise 10 bis 50 Gew.-%, insbesondere 15 bis 45 Gew.-%, wie 20 bis 45 Gew.-% in der Polyesterharzformulierung vor, bezogen auf das Gesamtgewicht der Polyesterharzformulierung.

In einer weiteren bevorzugten Ausführungsform umfasst die Polyesterharzformulierung 10 bis 40 Gew.-% der erfindungsgemäßen Verbindung mit der Formel (I), (la) oder (II) und 15 bis 70 Gew.-% zusätzliche Verbindung(en) mit flammhemmenden Eigenschaften, bezogen auf das Gesamtgewicht der Polyesterharzformulierung.

In einer weiteren bevorzugten Ausführungsform umfasst die Polyesterharzformulierung 10 bis 30 Gew.-% der erfindungsgemäßen Verbindung(en) mit der Formel (I), (la) oder (II) und 15 bis 40 Gew.-% zusätzliche Verbindung mit flammhemmenden Eigenschaften, bezogen auf das Gesamtgewicht der Polyesterharzformulierung.

Die Formulierung kann ferner Härtungsmittel enthalten. Das Härtungsmittel kann vorzugweise in einer Konzentration von 0,5 bis 5 Gew.-%, vorzugsweise 1 bis 4 Gew.-%, wie 1,5 bis 2,5 Gew.-% in der Polyesterharzformulierung vorliegen, bezogen auf das Gesamtgewicht der Polyesterharzformulierung. Als Härtungsmittel eignen sich insbesondere organische Peroxide, c-c-labile Initiatoren sowie Photoinitiatoren. Ein geeignetes Härtungsmittel ist tert-Butylperoxybenzoat, welches kommerziell u.a. unter dem Handelsnamen Trigonox C erhältlich ist.

In einer bevorzugten Ausführungsform umfasst die Polyesterharzformulierung ferner Reaktivverdünner in einer Konzentration von 1 bis 60 Gew.-%, wie 10 bis 40 Gew.-%. 1 bis 30 Gew.-%, 1 bis 28 Gew.-% oder 10 bis 28 Gew.-%, bezogen auf das Gesamtgewicht der Polyesterharzformulierung. In einer bevorzugten Ausführungsform ist der Reaktivverdünner Styrol oder ein (Meth)Acrylat wie z.B. Hydroxyethylmethacrylat. Weitere mögliche Reaktivverdünner sind Methylstyrol, Vinyltoluol, Hexandiolacrylat, Triallylcyanurat, Diallylphthalat und mehrwertige Acrylsäureester und/oder Mischungen davon.

Auch das eingesetzte ungesättigtes vernetzbares Polyesterharz kann bereits Reaktivverdünner enthalten. In diesem Fall ist die Gesamtkonzentration an Reaktivverdünner in der Polyesterharzformulierung vorzugsweise 1 bis 60 Gew.-%, wie 10 bis 40 Gew.-%. 1 bis 30 Gew.-%, 1 bis 28 Gew.-% oder 10 bis 28 Gew.-%, jeweils bezogen auf das Gesamtgewicht der Polyesterharzformulierung.

Der erfindungsgemäßen Polyesterharzformulierung kann (zusätzlich zu ggf. vorhanden Reaktivverdünner aus dem Polyesterharz) Reaktivverdünner in einer Menge von 0,1 bis 30 Gew.-%, wie 0,1 bis 20 Gew.-% hinzugegeben werden, jeweils bezogen auf das Gesamtgewicht der Polyesterharzformulierung.

In einer bevorzugten Ausführungsform umfasst die Polyesterharzformulierung, bezogen auf das Gesamtgewicht der Polyesterharzformulierung:
1 bis 90 Gew.-% ungesättigtes vernetzbares Polyesterharz,
1 bis 60 Gew.-% Verbindung mit der Formel (I), (la) oder (II),
0,5 bis 5 Gew.-% Härtungsmittel, und
1 bis 60 Gew.-% Reaktivverdünner, wobei der Reaktivverdünner vorzugsweise Styrol ist.

In einer bevorzugten Ausführungsform umfasst die Polyesterharzformulierung, bezogen auf das Gesamtgewicht der Polyesterharzformulierung:
10 bis 80 Gew.-% ungesättigtes vernetzbares Polyesterharz,
10 bis 50 Gew.-% Verbindung mit der Formel (I), (la) oder (II),
1 bis 4 Gew.-% Härtungsmittel, und
10 bis 40 Gew.-% Reaktivverdünner, wobei der Reaktivverdünner vorzugsweise Styrol ist.

In einer bevorzugten Ausführungsform umfasst die Polyesterharzformulierung, bezogen auf das Gesamtgewicht der Polyesterharzformulierung:
25 bis 75 Gew.-% ungesättigtes vernetzbares Polyesterharz,
15 bis 40 Gew.-% Verbindung mit der Formel (I), (la) oder (II),
1 bis 3 Gew.-% Härtungsmittel, und
15 bis 35 Gew.-% Reaktivverdünner, wobei der Reaktivverdünner vorzugsweise Styrol ist.

In einer bevorzugten Ausführungsform besteht die Polyesterharzformulierung aus, bezogen auf das Gesamtgewicht der Polyesterharzformulierung:
25 bis 75 Gew.-% ungesättigtes vernetzbares Polyesterharz,
15 bis 40 Gew.-% Verbindung mit der Formel (I), (la) oder (II),
1 bis 3 Gew.-% Härtungsmittel, und
15 bis 35 Gew.-% Reaktivverdünner, wobei der Reaktivverdünner vorzugsweise Styrol ist.

In einer bevorzugten Ausführungsform umfasst die Polyesterharzformulierung, bezogen auf das Gesamtgewicht der Polyesterharzformulierung:
10 bis 80 Gew.-% ungesättigtes vernetzbares Polyesterharz,
5 bis 40 Gew.-% Verbindung mit der Formel (I), (la) oder (II),
15 bis 70 Gew.-% zusätzliche Verbindung(en) mit flammhemmenden Eigenschaften, vorzugsweise ausgewählt aus der Gruppe bestehend aus Aluminiumtrihydrat (ATH), Zinkhydroxystannat (ZHS), Ammoniumpolyphosphat (APP) und/oder Mischungen davon 1 bis 4 Gew.-% Härtungsmittel, und
10 bis 40 Gew.-% Reaktivverdünner, wobei der Reaktivverdünner vorzugsweise Styrol ist.

In einer bevorzugten Ausführungsform umfasst die Polyesterharzformulierung, bezogen auf das Gesamtgewicht der Polyesterharzformulierung:
25 bis 75 Gew.-% ungesättigtes vernetzbares Polyesterharz,
10 bis 30 Gew.-% Verbindung mit der Formel (I), (la) oder (II),
20 bis 60 Gew.-% zusätzliche Verbindung(en) mit flammhemmenden Eigenschaften, vorzugsweise ausgewählt aus der Gruppe bestehend aus Aluminiumtrihydrat (ATH), Zinkhydroxystannat (ZHS), Ammoniumpolyphosphat (APP) und/oder Mischungen davon 1 bis 3 Gew.-% Härtungsmittel, und
15 bis 35 Gew.-% Reaktivverdünner, wobei der Reaktivverdünner vorzugsweise Styrol ist.

In einer bevorzugten Ausführungsform besteht die Polyesterharzformulierung aus, bezogen auf das Gesamtgewicht der Polyesterharzformulierung:
25 bis 75 Gew.-% ungesättigtes vernetzbares Polyesterharz,
10 bis 30 Gew.-% Verbindung mit der Formel (I), (la) oder (II),
20 bis 60 Gew.-% zusätzliche Verbindung(en) mit flammhemmenden Eigenschaften, vorzugsweise ausgewählt aus der Gruppe bestehend aus Aluminiumtrihydrat (ATH), Zinkhydroxystannat (ZHS), Ammoniumpolyphosphat (APP) und/oder Mischungen davon 1 bis 3 Gew.-% Härtungsmittel, und
15 bis 35 Gew.-% Reaktivverdünner, wobei der Reaktivverdünner vorzugsweise Styrol ist.

Die erfindungsgemäße Polyesterharzformulierung kann ferner die oben beschriebene Additive enthalten. In einer bevorzugten Ausführungsformenthält die Polyesterharzformulierung Glasfasern oder Kunstfasern wie Aramidfasern oder Kohlefasern zur Verstärkung der gehärteten Polyesterharzzusammensetzung Zudem kann die erfindungsgemäße Polyesterzusammensetzung gegebenenfalls mit Weichmachern, Füllstoffen oder Pigmenten modifiziert sein.

In einer bevorzugten Ausführungsform weist die Polyesterharzformulierung eine dynamische Viskosität bei 25°C von 10 bis 8000 mPa auf, vorzugsweise 100 bis 5000, gemessen mit Hilfe eines Rotationsviskosimeter mit Platte-Kegel-Aufsatz (Standardmethode: Physica MCR 302e, Platte/Kegel-System 25mm/1°, Schergeschwindigkeit: 1s⁻¹, Spaltabstand: 0,058 mm, Messtemp.:25°C, Messzeit: 2 Min).

Die erfindungsgemäße Polyesterharzformulierung kann insbesondere zur Herstellung flammfester, gehärteter Polyester verwendet werden. Diese Polyester weisen dann eine fest mit der Harzmatrix verbundene Phosphorkomponente auf.

Die Erfindung betrifft auch die Verwendung der erfindungsgemäßen Verbindungen als Flammschutzmittel in einem ungesättigten vernetzbaren Polyesterharz, wobei die entstehende Polyesterharzformulierung die oben definierten Eigenschaften aufweist. Vorzugsweise erfüllt die Polyesterharzformulierung hierbei das Kriterium V-2 des Underwriter's Laboratories Standard UL 94 V Tests, insbesondre das Kriterium V-1 wie V-0.

### Beispiele

### Beispiel 1) Herstellung von DOPO-AGE

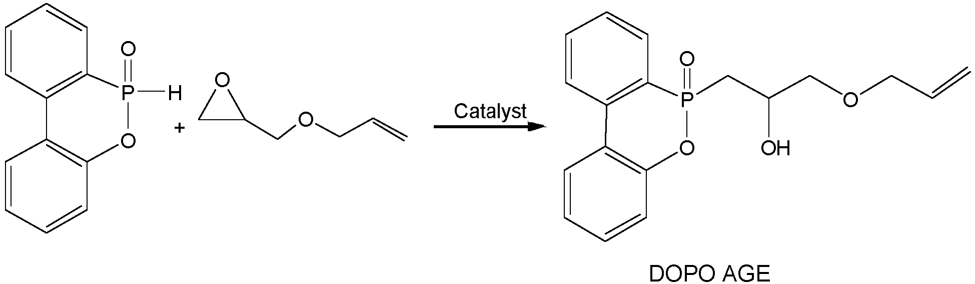

Es werden 34,4 bis 51,3 Gew.-% Allylglycidylether (AGE) und 0,2 bis 0,5 Gew.-% eines Katalysators wie z.B. Triethylamin (TEA) vorgelegt, wobei die Zugabe des Katalysators gegebenenfalls auch zu einem späteren Zeitpunkt erfolgen kann. Die Mischung wird kontrolliert auf 140 °C erhitzt. Ab einer Temperatur von 100 °C wird die erste Portion 9,10-Dihydro-9-oxa-10-phosphaphenanthren-10-oxid (DOPO) zugefügt, wobei die Temperatur 90 °C nicht unterschreiten soll. Die Reaktionstemperatur wird anschließend im Bereich von 140-170 °C gehalten. Nach nahezu vollständiger Umsetzung des DOPO erfolgt die Zugabe weiterer Portionen in einer Weise, die sicherstellt, dass die Temperatur 170 °C nicht überschreitet. Dieser Schritt wird wiederholt, bis insgesamt 48,4 bis 65,3 Gew.-% DOPO dosiert und vollständig umgesetzt wurden. Anschließend wird auf unter 100 °C abgekühlt und ggf. überschüssiges AGE destillativ entfernt.

Die dynamische Viskosität der hergestellten Verbindung betrug 51 Pas, gemessen bei 25 °C an einem Rheometer MCR 302e.

### Beispiel 2) Herstellung der Prüfkörper:

Die in Beispiel 1 erhaltende erfindungsgemäße Verbindung (im Folgenden als DOPO-AGE bezeichnet) wird kurz bei 80 bis 100 °C aufgeschmolzen und gemeinsam mit Styrol, ungesättigtem vernetzbaren Polyesterharz (UP Harz, Palapreg 17-02 der Firma aliancy) sowie ggf. ATH (Martinal OL-104 LEO der Firma Akrochem) homogenisiert und entgast (1 min, 1300 rpm, 1kPa). Hierbei wird ein Planetary Vacuum Mixer der Firma Thinky verwendet. Im Anschluss wird der Härter (Trigonox C der Firma Fa. Nouryon) hinzugegeben und erneut homogenisiert und entgast (2 min, 1300 rpm, 1kPa). Das Harzgemisch wird in eine Form gegossen und in einem Trockenschrank mittels Temperaturprogramm ausgehärtet. Dabei wird von RT mit einer Aufheizrate von 1,67 K/min auf 120 °C geheizt und 45 min bei 120 °C gehalten. Anschließend wird die Temperatur mit einer Rate von 1K/min auf 150 °C erhöht und diese für 2 h gehalten. Es wird auf RT abgekühlt und die Prüfkörper werden in Stäbchenform gemäß UL94 aus der Platte ausgefräst.

Die Zusammensetzung der unterschiedlichen hergestellten Polyesterharzformulierungen/ Prüfkörper sind in Tabelle 2 aufgeführt. Hierbei wurde der angegebene Phosphorgehalt der Formulierungen rechnerisch ermittelt.

### Beispiel 3) Messung der flammhemmenden Eigenschaften:

Die in Beispiel 2 hergestellten Prüfkörper wurden gemäß dem Underwriter's Laboratories Standard UL 94 V (Vertical Burning Test) geprüft. Bei dieser Prüfung werden die vertikal eingespannte Prüfkörper während 10 Sekunden am unteren Ende des Prüfkörpers beflammt. Nach Verlöschen der Flamme wird der Vorgang für weitere 10 Sekunden wiederholt. Dies wird an fünf Prüfkörpern durchgeführt. Die Brenn- und Glühzeiten werden notiert sowie die Summe daraus gebildet. Weiterhin wird festgehalten, ob vom Prüfkörper Tropfen abfallen und sich dabei Watte unterhalb des Prüfkörpers entzündet. Die Einstufungen nach UL 94 V reichen von V-2 bis zur besten Klasse V-0. Für die Einstufung nach V-0 oder V-1 darf die Watte nicht durch glühende oder brennende Tropfen entzündet werden. V-2 erlaubt das Entflammen der Watte.

Die Prüfkriterien sind übersichtlich in der nachfolgenden Tabelle 1 angegeben.

| Prüfkriterium | V-0 | V-1 | V-2 |
|---|---|---|---|
| Brennzeit jedes einzelnen Stabes (s) (nach der 1. und 2. Beflammung) | ≤ 10 s | ≤ 30 s | ≤ 30 s |
| Brenn- und Nachglühzeiten nach zweiter Beflammung (s) | ≤ 30 s | ≤ 60 s | ≤ 60 s |
| Gesamtbrennzeit (s) (10 Beflammungen) | ≤ 50 s | ≤ 250 s | ≤ 250s |
| Brennendes Abtropfen (Entzündung der Watte) | Nein | Nein | Ja |
| Abbrennen bis zur Halteklammer (Prüfkörper vollständig verbrannt) | Nein | Nein | Nein |

**Tabelle 2 Bei dem verwendeten ungesättigtem Polyesterharz (UP-Harz) handelt es sich um Palapreg P17-02 mit einem theoretischen Styrolgehalt von 35 %. Die angegebene Menge an UP-Harz in der Tabelle enthält damit auch Styrol. Zusätzlich wurden zu einigen der Formulierungen Styrol hinzugegeben. Insofern ergibt sich der Gesamtstyrolgehalt der Formulierung aus der Menge, die im UP-Harz enthalten ist und der zusätzlich zugegebenen Menge an UP-Harz. Als Härter wurde Trigonox C verwendet.**

| | | **UP-Harz [Gew.-%]** | **Zugegebe nes Styrol [Gew.-%]** | **Härter [Gew.-%]** | **DOPO-AGE [Gew.-%]** | **ATH [Gew.-%]** | **Berechneter Phosphorgehalt [Gew.-%]** | **Gesamtstyrol -gehalt der Formulierung [Gew.-%]** | **Verhältnis DOPO-AGE:ATH (Gew.-%, zu Gew.-%)** | **UL 94** |
|---|---|---|---|---|---|---|---|---|---|---|
| **1** | UP-Harz | 98,0 | - | 2,0 | - | - | 0 | 34,3 | - | nicht bestanden |
| **2** | UP-Harz + DOPO-AGE (2,75% Phosphor) | 68,1 | 0,7 | 2,0 | 29,3 | - | 2,75 | 24,5 | 100:0 | V-2 |
| **3** | UP-Harz + DOPO-AGE (3,0% Phosphor) | 64,0 | 2,1 | 2,0 | 31,9 | - | 3,0 | 24,5 | 100:0 | V-0 |
| **4** | UP-Harz + DOPO-AGE (3,5% Phospor) | 55,8 | 5,0 | 2,0 | 37,2 | - | 3,5 | 24,5 | 100:0 | V-0 |
| **5** | UP-Harz + DOPO-AGE (3,5% Phosphor) | 48,3 | 12,5 | 2,0 | 37,2 | - | 3,5 | 29,4 | 100:0 | V-1 |
| **6** | UP-Harz + 40% ATH | 51,5 | 6,5 | 2,0 | - | 40 | 0 | 24,5 | 0:100 | V-2 |
| **7** | UP-Harz + 50% ATH | 36,2 | 11,8 | 2,0 | - | 50 | 0 | 24,5 | 0:100 | V-0 |
| **8** | UP-Harz + DOPO-AGE (1,5% Phosphor) + 24% ATH | 51,7 | 6,4 | 2,0 | 16,0 | 23,9 | 1,5 | 24,5 | 40:60 | V-2 |
| **9** | UP-Harz + DOPO-AGE (1,5% Phosphor) + 37% ATH | 31,2 | 13,6 | 2,0 | 16,0 | 37,2 | 1,5 | 24,5 | 30:70 | V-0 |
| **1 0** | UP-Harz + DOPO-AGE (2% Phosphor) + 32% ATH | 31,2 | 13,6 | 2,0 | 21,3 | 31,9 | 2,0 | 24,5 | 40:60 | V-0 |

Aus den Beispieldaten in Tabelle 2 wird ersichtlich, dass beim Einsatz der erfindungsgemäßen Verbindung (DOPO-AGE) ohne eine zusätzliche Verbindung mit flammhemmenden Eigenschaften (Synergisten) bereits geringe Phosphorgehälter ausreichend sind, um UL94 V-0 erreichen zu können (Eintrag 3). Die Daten zeigen, dass der Gehalt an Flammschutzmittel, welcher zugegeben muss, um V-0 erreichen zu können, in einer identischen Harzmatrix ebenfalls stark von der zugesetzten Menge Styrol, und demnach der gesamten UP-Harz Formulierung abhängig ist (Eintrag 4 & 5). Demnach ist zu vermuten, dass der Einsatz von geringeren Mengen DOPO-AGE in anderen Systemen ebenfalls zu einer V-0 Einstufung führt. Bei Verwendung von ATH als alleiniges Flammschutzmittel sind Mengen von 40 bis 50 Gew.-% in der Beispielformulierung notwendig, um V-0 erreichen zu können (Eintrag 6 & 7). Dies hat einen erheblichen Einfluss auf die mechanischen Eigenschaften (s.u.) der Prüfkörper. Außerdem erhöht der Zusatz dieser hohen Mengen an ATH das Gewicht der Prüferkörper stark. Durch Zugabe von DOPO-AGE kann der Anteil an ATH, welches zum Erreichen von V-0 zugegeben werden muss, deutlich verringert werden (Eintrag 9 & 10).

### Beispiel 4) Messung der mechanischen und rheologischen Kenndaten:

Die in Beispiel 2 hergestellten Prüfkörper werden weiterhin auf ihre mechanischen Eigenschaften überprüft. Die Messergebnisse der mechanischen Kenndaten sind in Tabelle 3 wiedergegeben.

Das Biegemodul und die Biegefestigkeit der Polyesterharzprüfkörper wurde mittels 3-Punktbiegeprüfung nach ISO 178 bestimmt.

Die dynamische Viskosität bei 25°C wurde mit Hilfe eines Rotationsviskosimeter mit Platte-Kegel-Aufsatz (Rheometer MCR 302e) mit Hilfe der Standardmethode: Physica MCR 302e, (Platte/Kegel-System 25mm/1°, Schergeschwindigkeit: 1s⁻¹, Spaltabstand: 0,058 mm, Messtemp.:25°C, Messzeit: 2 Min) bestimmt.

Aus den hergestellten Platten wurden Prüfkörper mit den Maßen 55x10 mm gefräst und der Tg mittels DMA Messung an einem EPLEXOR 500 N (Fa. GABO) durch Auswertung nach tan δ ermittelt. (Parameter: 50-200 °C, Heizrate 3 K/min, f = 1 Hz, dyn. strain = 0,5 %)

**Tabelle 3**

| | **Prüfkörper** | **Biegemodul [MPa]** | **Bruchdehnung [%]** | **DV 25 [mPa·s]** | ***T*_{g} [°C]** |
|---|---|---|---|---|---|
| **1** | UP-Harz | 3840 ± 150 | 1,8 ± 0,4 | 3200 | 191,0 |
| **2** | UP-Harz + DOPO-AGE (2,75% Phosphor) | 4720 ± 60 | 1,9 ± 0,3 | 8200 | 140,5 |
| **3** | UP-Harz + DOPO-AGE (3,0% Phosphor) | 4700 ± 110 | 1,7 ± 0,2 | 6200 | 140,9 |
| **4** | UP-Harz + DOPO-AGE (3,5% Phospor) | 4270 ± 40 | 2,4 ± 0,2 | 2600 | 131,2 |
| **5** | UP-Harz + DOPO-AGE (3,5% Phosphor) | 3380 ± 100 | 3,6 ± 0,3 | 790 | 129,5 |
| **6** | UP-Harz + 40% ATH | 6150 ± 60 | 1,4 ± 0,2 | 4900 | 192,9 |
| **7** | UP-Harz + 50% ATH | 7170 ± 60 | 1,3 ± 0,1 | 5200 | 183,6 |
| **8** | UP-Harz + DOPO-AGE (1,5% Phosphor) + 24% ATH | 5970 ± 90 | 1,6 ± 0,1 | 4400 | 158,7 |
| **9** | UP-Harz + DOPO-AGE (1,5% Phosphor) + 37% ATH | 6940 ± 50 | 1,4 ± 0,2 | 3200 | 147,3 |
| **10** | UP-Harz + DOPO-AGE (2% Phosphor) + 32% ATH | 6120 ± 100 | 1,3 ± 0,1 | 2100 | 142,7 |

Die erfindungsgemäßen Verbindungen können als flüssige, reaktive Flammschutzmittel für Polyesterharze eingesetzt werden, wobei die Verbindungen mit dem chemischen "Rückgrat" des Polyesterharzes reagieren, ohne die mechanischen Eigenschaften des Polyesterharzes zu verändern bzw. zu verschlechtern:
Die mechanischen Eigenschaften des vernetzten Polyesterharzes, insbesondere der Biegemodul, werden stark durch Zugabe des Flammschutzmittels ATH beeinflusst. Bei dem Einsatz von 50 Gew.-% ATH welches einer Menge entspricht, die zum Erreichen von V-0 notwendig ist, kommt es nahezu zu einer Verdopplung des Moduls (Eintrag 1 & 7) und die Bruchdehnung nimmt leicht ab. Beim Zusatz von DOPO-AGE ist der Modul nahezu unbeeinflusst (Eintrag 1 - 5), während die Bruchdehnung mit steigendem Gehalt an DOPO-AGE leicht zunimmt (Eintrag 2-5). Die Mischviskosität sinkt mit steigendem Anteil DOPO-AGE (Eintrag 2-4), während sie mit dem Gehalt an ATH zunimmt (Eintrag 6 & 7). Dies bewirkt, dass der Gehalt an Styrol beim Einsatz von DOPO-AGE im Vergleich zum ATH deutlich verringert werden kann, was Umweltvorteile hat.

Die Daten aus Tabelle 3 zeigen, dass sich durch den Einsatz von DOPO-AGE mit ATH in verschiedenen Mengenverhältnissen je nach Anwendung und Anforderungen an das Endprodukt bzw. Verarbeitung verschiedene Eigenschaften des UP-Harzes einstellen lassen und in verschiedenen Kombination V-0 erreicht werden kann.

## Patentansprüche

1. Verbindung mit der folgenden chemischen Formel (I), 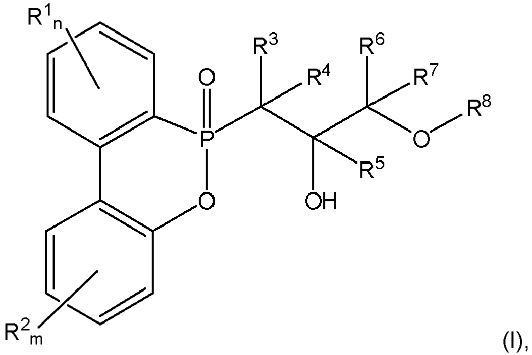 in der
R¹ und R² jeweils gleich oder verschieden sind und jeweils unabhängig voneinander C₁ - bis C₁₂- Alkyl, C₁ - bis C₁₂- Alkenyl, C₃ - bis C₈- -Cycloalkyl, C₆ - bis C₁₄ -Aryl, C₇ - bis C₃₀-Alkylarylgruppen sind; wobei ein oder mehrere C-Atome durch ein O- oder N-Atom substituiert sein können und/oder ein oder mehrere H-Atome durch eine OH-Gruppe substituiert sein können,
R³, R⁴, R⁵, R⁶ und R⁷ gleich oder verschieden sind und jeweils unabhängig voneinander H, oder C₁ - bis C₁₂- Alkylgruppen sind; wobei ein oder mehrere C-Atome durch ein O- oder N-Atom substituiert sein können und/oder ein oder mehrere H-Atome durch eine OH-Gruppe substituiert sein können;
n und m jeweils unabhängig voneinander ganze Zahlen von 0 bis 4 sind; und
R⁸ eine C₂ - bis C₁₄- Alkenylgruppe mit einer terminalen Doppelbindung ist.

2. Verbindung nach Anspruch 1, **dadurch gekennzeichnet, dass** n und m jeweils unabhängig voneinander 0 oder 1, vorzugsweise beide 0 sind.

3. Verbindung nach einem der Ansprüche 1 bis 2, **dadurch gekennzeichnet, dass** R³, R⁴, R⁵, R⁶ und R⁷ jeweils unabhängig voneinander ausgewählt sind aus H, Methyl-, Ethyl- oder Propyl-, wobei vorzugsweise mindestens R³, R⁵, und R⁷ H sind.

4. Verbindung nach einem der Ansprüche 1 bis 3, **dadurch gekennzeichnet, dass** R³, R⁴, R⁵, R⁶ und R⁷ jeweils H sind.

5. Verbindung nach einem der Ansprüche 1 bis 4, **dadurch gekennzeichnet, dass** R⁸ eine lineare C₂ - bis C₈- Alkenylgruppe, vorzugsweise eine lineare C₂ - bis C₅- Alkenylgruppe ist.

6. Verbindung nach einem der Ansprüche 1 bis 5 mit der folgenden chemischen Formel (II):

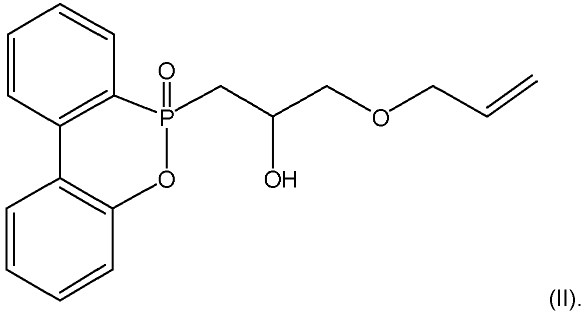

7. Flammschutzmittel, welches die Verbindung nach einem der Ansprüche 1 bis 6 umfasst.

8. Flammschutzmittel nach Anspruch 7, **dadurch gekennzeichnet, dass** es ferner mindestens eine zusätzliche Verbindung mit flammhemmenden Eigenschaften und oder weitere Additive enthält, wobei die mindestens eine zusätzliche Verbindung mit flammhemmenden Eigenschaften vorzugsweise ausgewählt ist aus der Gruppe bestehend aus Aluminiumtrihydrat, Zinkhydroxystannat, Ammoniumpolyphosphat und/oder Mischungen davon.

9. Polyesterharzformulierung, die mindestens ein ungesättigtes vernetzbares Polyesterharz und mindestens ein Flammschutzmittel gemäß den Ansprüchen 7 oder 8 umfasst.

10. Polyesterharzformulierung nach Anspruch 9, **dadurch gekennzeichnet, dass** das mindestens eine ungesättigte Polyesterharz ein Polykondensationsprodukt einer ungesättigten Dicarbonsäure und/oder deren Anhydrids und eines zwei- oder mehrwertigen Alkohols ist, wobei vorzugsweise die Dicarbonsäure aus der Gruppe bestehend aus Itaconsäure, Maleinsäure, Fumarsäure, Bernsteinsäure, Adipinsäure, Phthalsäure, Isophthalsäure, Terephthalsäure und Tetrahydrophthalsäure ausgewählt ist und/oder der Alkohol aus der Gruppe bestehend aus 1,2-Propandiol, 1,3-Propandiol, 1,3-Butandiol, 1,4-Butandiol, Ethylenglykol, Neopentylglykol, Diethylenglykol und Tris-2-hydroxyethylisocyanurat ausgewählt ist.

11. Polyesterharzformulierung nach einem der Ansprüche 9 oder 10, **dadurch gekennzeichnet, dass** die Verbindung wie in den Ansprüchen 1 bis 6 definiert in der Formulierung in einer Konzentration von 1 bis 60 Gew.-% vorliegt, vorzugsweise 10 bis 50 Gew.-%, insbesondere 15 bis 45 Gew.-%, bezogen auf das Gesamtgewicht der Polyesterharzformulierung.

12. Polyesterharzformulierung nach einem der Ansprüche 9 bis 11, **dadurch gekennzeichnet, dass** die Formulierung ferner Härtungsmittel und/oder Reaktivverdünner enthält, wobei das Härtungsmittel vorzugweise in einer Konzentration von 1 bis 5 Gewichtsprozent in der Polyesterharzformulierung vorliegt und/oder der Reaktivverdünner in einer Konzentration von 1 bis 60 Gew.-%, vorzugsweise von 10 bis 40 Gew.-%, jeweils bezogen auf das Gesamtgewicht der Polyesterharzformulierung und wobei der Reaktivverdünner vorzugsweise Styrol oder ein Acrylat wie Hydroxyethylmethacrylat ist.

13. Polyesterharzformulierung nach einem der Ansprüche 9 bis 12, **dadurch gekennzeichnet, dass** sie einen Gesamtphosphorgehalt von 0,5 bis 8 Gew.-% vorzugsweise von 1 bis 6 Gew.-%, bezogen auf das Gesamtgewicht der Polyesterharzformulierung aufweist.

14. Verwendung der Verbindungen nach einem der Ansprüche 1 bis 6 als Flammschutzmittel in einem ungesättigten vernetzbaren Polyesterharz, wobei die entstehende Polyesterharzformulierung die Eigenschaften wie in einem der Ansprüche 9 bis 13 definiert, aufweist, wobei vorzugsweise die Polyesterharzformulierung das Kriterium V-2 des Underwriter's Laboratories Standard UL 94 V Tests erfüllen, insbesondre das Kriterium V-1 wie V-0.

15. Verfahren zur Herstellung einer Verbindung nach einem der Ansprüche 1 bis 6, wobei eine Verbindung der Formel (III) mit einer Verbindung der Formel (IV) 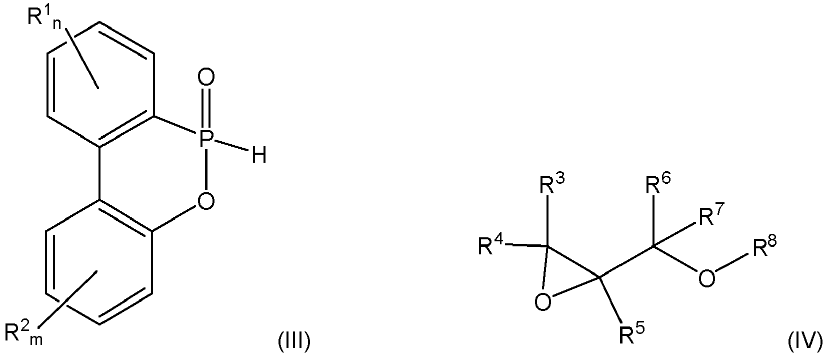 in der Gegenwart von Katalysator umgesetzt wird.
